(19) Europäisches Patentamt

European Patent Office

Office européen des brevets

(11) Numéro de publication : **0 318 387 B1**

(12) **FASCICULE DE BREVET EUROPEEN**

(45) Date de publication du fascicule du brevet :
28.08.91 Bulletin 91/35

(51) Int. Cl.⁵ : **G01N 29/00**

(21) Numéro de dépôt : **88402959.6**

(22) Date de dépôt : **24.11.88**

(54) Dispositif de contrôle non destructif de tubes par ultrasons.

(30) Priorité : **25.11.87 FR 8716353**

(43) Date de publication de la demande :
**31.05.89 Bulletin 89/22**

(45) Mention de la délivrance du brevet :
**28.08.91 Bulletin 91/35**

(84) Etats contractants désignés :
**BE CH DE ES GB IT LI NL**

(56) Documents cités :
**DE-A- 3 131 883**
**GB-A- 2 020 023**
**PATENT ABSTRACTS OF JAPAN, vol. 10, no.**
**183 (P-472)[2239], 26 juin 1986, page 139 P 472**
**& JP A 6131962**

(56) Documents cités :
**PATENT ABSTRACTS OF JAPAN, vol. 8, no.**
**257(P-316)[1694], 24 novembre 1984, page 22 P**
**316 & JPA 59126946**
**PATENT ABSTRACTS OF JAPAN, vol. 8, no.**
**147 (P-285)[1584], 10 juillet 1984, page 15 P 285**
**& JP A 5944655**

(73) Titulaire : **ELECTRICITE DE FRANCE (Service**
**National)**
**2, rue Louis Murat**
**F-75008 Paris (FR)**

(72) Inventeur : **Vallée, Jean-Pierre**
**4 Rue de la Fontaine**
**F-78820 Juziers (FR)**

(74) Mandataire : **Fort, Jacques**
**CABINET PLASSERAUD 84, rue d'Amsterdam**
**F-75009 Paris (FR)**

## Description

L'invention a pour objet un dispositif ultrasonore de contrôle non destructif de tubes minces, comprenant une tête insérable dans le tube et munie de moyens de centrage dans ce dernier et des moyens permettant de donner à la tête des mouvements de translation le long d'un axe et de rotation autour de cet axe.

L'invention trouve une application particulièrement importante, bien que non exclusive, dans le contrôle non destructif par ultrasons des tubes dans les générateurs de vapeur de centrales nucléaires à eau sous pression.

On connaît déjà des dispositifs de contrôle de tubes dont la tête est munie de moyens de centrage dans le tube, permettant de rendre l'axe de la tête coaxial à l'axe du tube, et contient des moyens traducteurs d'ultrasons couplés par immersion dans un liquide de couplage avec la paroi du tube, capables d'émettre un faisceau d'ultrasons en ondes de volume et de détecter les échos dûs à des défauts longitudinaux. De tels dispositifs sont décrits dans GB-A-2020023 et dans DE-A-3131883.

Comparés aux dispositifs de contrôle par courants de Foucault, les dispositifs utilisant les ultrasons présentent en apparence un inconvénient : l'écho fourni par un défaut, tel qu'une fissure, varie fortement avec l'orientation du défaut. Si on utilise par exemple un traducteur ultrasonore fournissant un faisceau dirigé suivant un plan méridien, il est difficile de détecter les fissures longitudinales et les tronçons longitudinaux de fissures longues de forme tourmentée.

L' invention vise à fournir un dispositif ultrasonore de contrôle répondant mieux que ceux antérieurement connus aux exigences de la pratique, notamment en ce qu'il permet de détecter aussi bien les défauts orientés longitudinalement par rapport à l'axe du tube que les défauts ayant un développement circonférentiel. Pour cela, l'invention propose un dispositif dans lequel lesdits moyens traducteurs comprennent :

— au moins un premier traducteur ultrasonore fournissant un faisceau focalisé dirigé dans un plan méridien du tube et faisant un angle avec la normale de la paroi, et

— au moins un second traducteur ultrasonore fournissant un faisceau focalisé dirigé parallèlement à un diamètre du tube et à distance de ce diamètre de façon que le faisceau soit oblique à la paroi du tube. L'expérience a montré que la détection des défauts circonférentiels n'est pas gênée par la présence de défauts longitudinaux et que ces derniers sont détectés de façon sûre lorsque le faisceau du second traducteur est réfracté à 45° environ dans la paroi, de façon à détecter les défauts par effet de coin. A l'heure actuelle, il existe des traducteurs focalisés, ayant un diamètre aussi faible que 6 mm, qui peuvent être placés suffisamment loin du diamètre pour remplir cette condition dans un tube d'échangeur de chaleur du genre utilisé sans les centrales nucléaires actuelles.

La détection des fissures transversales est particulièrement difficile dans les zones du tube où le diamètre varie, telles que les zones de fin de dudgeonnage, à proximité de la plaque tubulaire. Le changement de l'angle d'incidence du faisceau d'ultrasons dirigé suivant un plan méridien que provoque la variation de diamètre perturbe la mesure et peut masquer des fissures circulaires. Dans un mode avantageux de réalisation de l'invention, ce défaut est écarté en disposant deux premiers traducteurs symétriquement. Ainsi, lorsque la variation de diamère perturbe la détection dans une zone déterminée pour l'un des traducteurs, l'autre traducteur dirige un faisceau vers cette zone à travers une partie non perturbée.

On peut également disposer symétriquement deux seconds traducteurs, soit pour assurer une redondance, soit pour augmenter la rapidité de détection, soit pour limiter le risque de non détection de fissures masquées par d'autres, proches et parallèles des premières, pour une direction de détection.

Lorsqu'on souhaite non seulement détecter des fissures, mais également les différencier suivant le côté de la paroi dans laquelle elles s'ouvrent, il faut déterminer avec précision la longueur du trajet suivi dans l'épaisseur de la paroi. Mais une mesure de temps de vol permet simplement de déterminer le trajet total, à l'intérieur du tube et dans la paroi ; toute variation de distance entre le traducteur et la paroi interne du tube perturbe alors la mesure.

Pour tenir compte de ces variations, l'invention propose encore de munir la tête d'un réflecteur ultrasonore placé à proximité immédiate de la paroi interne du tube et orienté de façon à renvoyer vers le traducteur la fraction de faisceau acoustique réfléchie par la paroi. Le temps de vol du faisceau réfléchi est représentatif du parcours préliminaire dans le liquide de couplage et permet une localisation des fissures dépourvue d'ambiguité.

Ce moyen de correction ou d'asservissement est précis, car le même faisceau est utilisé pour la détection et pour la correction. L'expérience a montré qu'il suffit d'un réflecteur de très faible diamètre, de l'ordre du millimètre carré, pour obtenir des échos satisfaisants. Le réflecteur peut également être utilisé pour surveiller le couplage acoustique entre le traducteur et la paroi du tube et écarter les mesures lorsque le couplage est insuffisant, par exemple parce que des bulles sont interposées entre le traducteur et la paroi.

L'invention sera mieux comprise à la lecture de la description qui suit d'un mode particulier de réalisation, donné à titre d'exemple. La description se réfère aux dessins qui l'accompagnent, dans lesquels :

— la Figure 1 montre schématiquement un tronçon de tube d'échange de chaleur, dans la zone de fixation de ce tube à une plaque tubulaire,

— les Figures 2 et 3 montrent schématiquement le trajet suivi par un faisceau ultrasonore dirigé dans un plan méridien sous un angle destiné à permettre la détection par effet de coin de fissures circonférentielles débouchant sur la paroi interne (Figure 2) ou externe (Figure 3),

— la Figure 4, similaire à la Figure 3, montre la détection de fissures longitudinales par un faisceau dirigé parallèlement à un diamètre,

— les Figures 5 et 6 montrent, respectivement en coupe suivant un plan longitudinal et en coupe suivant le plan VI-VI de la Figure 5, une répartition possible de quatre traducteurs dans une tête de contrôle,

— la Figure 7 montre le montage d'un réflecteur sur le support d'un traducteur pour permettre la mesure du trajet préliminaire,

— la Figure 8 montre une constitution possible de tête de contrôle,

— la Figure 9 est un synoptique de principe de circuits associés à la tête de la Figure 8.

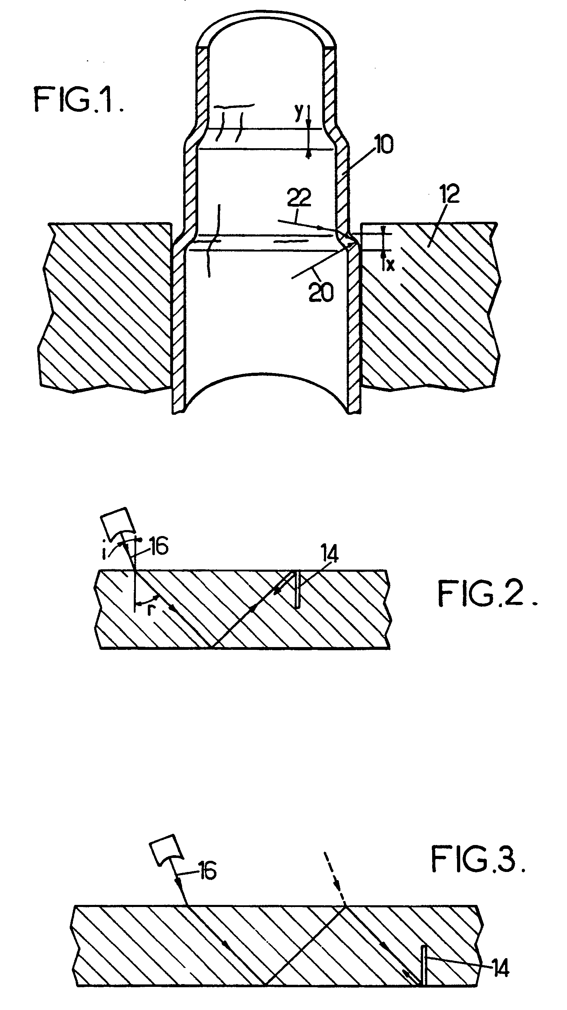

La tête de dispositif dont la constitution de principe et une réalisation possible seront décrites permet de contrôler un tube d'échangeur du genre montré schématiquement en Figure 1. Le tube 10 représenté est dudgeonné dans une plaque tubulaire 12 et présente une zone de diamètre variable, de longueur x, raccordant la fin du dudgeonnage à la partie courante du tube. Le tube peut présenter une seconde variation de diamètre dans une zone de longueur y si une déformation diamétrale de la zone de transmission a été effectuée pour abaisser les contraintes de traction.

Les tubes de générateur de vapeur sont en général fabriqués en alliage chrome-nickel-fer connu sous le nom d'"INCONEL 600". Dans de tels tubes peuvent apparaître, du fait de la corrosion sous contrainte, des fissures intergranulaires, notamment dans les zones de fin de dudgeonnage. La plupart des fissures qui apparaissent sont longitudinales. Leur cinétique est bien connue et elle ne risque pas de donner naissance à des ruptures catastrophiques. Mais des fissures transversales peuvent également apparaître. Elles ont un développement rapide et, lorsqu'on les détecte, les tubes correspondants doivent être bouchés préventivement.

Il est en conséquence important de pouvoir déterminer, à l'aide d'un dispositif de contrôle, non seulement l'existence de défauts, mais aussi leur orientation.

Le dispositif qui sera décrit plus loin utilise, pour détecter les défauts longitudinaux, au moins un traducteur fournissant un faisceau focalisé dont l'angle d'incidence est tel que le faisceau soit incliné à 45° sur la normale à l'intérieur de la paroi du tube. Le défaut constitué par une fissure interne 14 sera alors décelé du fait de la réflexion du faisceau 16 dans l'angle formé par le défaut et la face interne (Figure 2) ou externe (Figure 3) de la paroi du tube. On utilise avantageusement un faisceau focalisé, c'est-à-dire convergent, émis en onde de volume. On connaît déjà des traducteurs miniatures, dont le diamètre peut descendre jusqu'à 6 mm environ, permettant de fournir un faisceau convergent. La détection peut s'effectuer, dans le cas d'un défaut interne, avec un seul bond du faisceau sur la face externe, ou avec deux bonds ou même davantage. Dans la pratique, il sera souvent préférable d'éliminer les détections correspondant à deux bonds du faisceau ou davantage, pour lesquels l'affaiblissement est élevé, à l'aide d'une fenêtre de sélection temporelle.

Dans le cas de la détection d'un défaut externe (Figure 3) la détection peut par exemple s'effectuer pour un demi-bond et un bond et demi. L'emplacement de la fissure pourra être déduit du temps d'aller-retour du faisceau.

En général, il sera souhaitable d'effectuer le contrôle en ondes transversales, car une onde longitudinale est toujours accompagnée d'une onde transversale, du fait de sa vitesse de propagation plus élevée, ce qui peut créer une ambiguïté sur la position du défaut détecté. De plus, la résolution limite est meilleure dans le cas d'une onde transversale, dont la longueur d'onde est presque moitié de celle de l'onde longitudinale.

Cela conduira, pour obtenir un angle de réfraction r = 45° dans un matériau tel que l'INCONEL à adopter un angle d'incidence i de 20° environ.

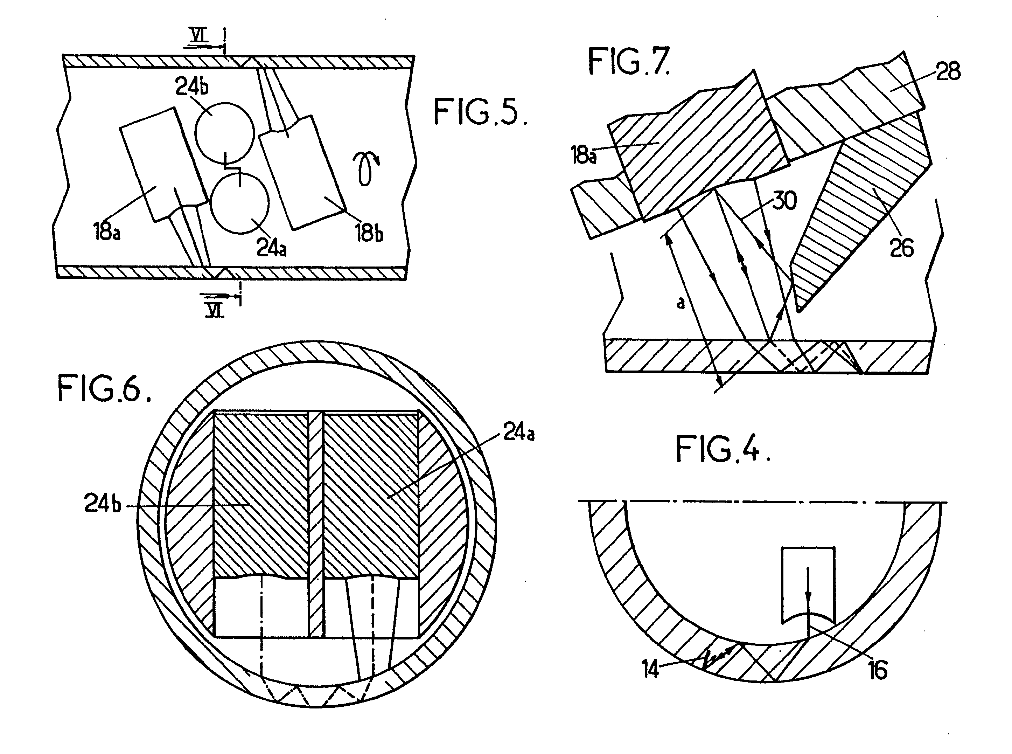

Les indications données ci-dessus au sujet des traducteurs de détection des défauts transversaux sont également valables dans le cas de la détection des défauts longitudinaux où la recherche d'un angle d'incidence de 20° imposera la distance de l'axe des traducteurs au diamètre, du moins lorsque l'axe des traducteurs est parallèle au diamètre (Figure 4).

Comme on l'a indiqué plus haut, l'utilisation d'un seul traducteur de détection des défauts transversaux peut laisser échapper des fissures, masquées par une variation de diamètre. Pour écarter ce risque, deux traducteurs 18a et 18b sont disposés de façon symétrique par rapport aux fissures transversales. Il est avantageux de les décaler l'un par rapport à l'autre de façon qu'ils sondent des zones complémentaires, écartées d'un demi-pas d'avance en translation. On s'affranchit ainsi en partie d'éventuels écarts d'angle d'incidence et de la zone d'ombre provoquée par une fissure et pouvant masquer une fissure parallèle et proche. On peut également placer les traducteurs de façon qu'ils contrôlent des zones décalées l'une de l'autre dans le sens longitudinal d'un demi-pas d'avance, lorsque la tête de contrôle est animée d'un mouvement hélicoïdal. On peut par exemple utiliser un décalage de 0,5 mm et travailler avec un pas d'avance en hélice de 1 mm par tour, pour diminuer ainsi le temps nécessaire au contrôle.

Un intérêt essentiel de l'utilisation de deux traducteurs en opposition est le fait qu'on fait disparaître les zones mortes dues aux variations de diamètre : on voit par exemple sur la Figure 1 que le faisceau arrivant suivant la direction 20 ne permettra pas une détection, du fait de son incidence incorrecte, mais que par contre le faisceau 22 permettra un sondage.

Les deux autres traducteurs 24a et 24b de la tête sont destinés à détecter les défauts longitudinaux. Ils sont montés en opposition (Figure 6) c'est-à-dire émettent des faisceaux parallèles. Leur décalage suivant l'axe longitudinal sera encore avantageusement un multiple impair du demi-pas d'avance.

On peut déterminer si un défaut s'ouvre sur la face interne ou la face externe de la paroi du tube en comparant le temps d'aller-retour d'une impulsion ultrasonore à des valeurs prédéterminées. Cette détermination se fait généralement en utilisant des fenêtres temporelles de mesure correspondant au temps de vol pour le cas d'écho à un bond et à un bond et demi. Mais ces deux échos ne sont séparés que par un temps très bref t :

$$t = e\sqrt{2}/V_t$$

e est l'épaisseur du tube (de l'ordre du millimètre dans ce cas de tube d'échange). Dans le cas de tube en Inconel, $V_t = 3020$ m · s$^{-1}$, ce qui correspond à un temps de parcours $t = 0,42$ μs.

Etant donné la brièveté du temps t, toute erreur sur la durée du parcours préliminaire a (Figure 7) peut provoquer une erreur d'interprétation. Or le diamètre intérieur du tube n'est défini qu'avec une tolérance importante et le centrage de la tête peut n'être pas parfait.

Pour écarter cette difficulté, la référence temporelle utilisée pour les fenêtres de sélection n'est pas constituée par l'instant d'émission d'une impulsion ultrasonore, mais par l'instant de réception d'un écho aisément identifiable et dont l'instant d'apparition présente la même loi de variation par rapport au parcours préliminaire a que le temps de vol.

L'incidence i étant élevée, l'énergie réfléchie vers le traducteur par la paroi du tube risque d'être insuffisante pour fournir un écho de référence et le volume disponible ne permet pas d'utiliser une référence constituée par un second traducteur.

Dans le mode de réalisation de l'invention montré en Figure 7, l'écho de référence est fourni par un réflecteur 26 solidaire du traducteur correspondant, 18a par exemple. Le traducteur 18a et le réflecteur 26 sont fixés sur un support commun 28 qui maintient le réflecteur dans une orientation telle que l'énergie réfléchie par la face interne de la paroi du tube revienne sur le traducteur. Cette disposition garantit que l'angle du faisceau réfléchi 30 qui servira à l'asservissement par ajustement des fenêtres temporelles, est le même que celui du faisceau principal et rend la correction de parcours préliminaire exacte, d'autant plus que le point d'impact sur la face interne de la paroi est le même pour le faisceau de détection et pour le faisceau d'asservissement. La correction s'effectue donc exactement à l'endroit de la mesure.

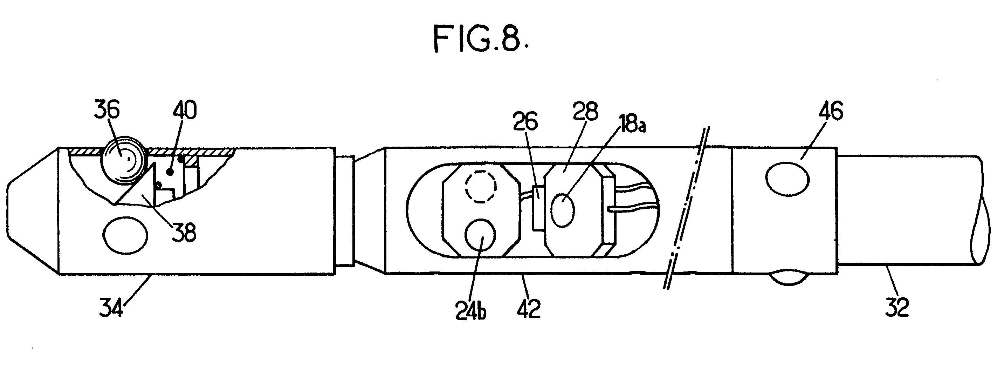

La Figure 8 montre une constitution possible de tête de mesure utilisant une disposition de traducteurs du genre montré en Figures 5 et 6. La tête est fixée à l'extrémité d'un tube souple 32 permettant de la déplacer le long d'un tube d'échangeur et livrant passage aux liaisons électriques avec les traducteurs. La tête est en plusieurs pièces raccordées. Son extrémité est constituée par un embout 34 ayant une extrémité conique pour faciliter son insertion dans le tube et muni d'un dispositif de centrage. Un tel dispositif n'a pas à assurer une grande précision, du fait de la compensation d'écart qui permet de réaliser le réflecteur 26. Le dispositif de centrage représenté est constitué de trois billes 36 qu'un poussoir 38 soumis à la pression d'un ressort 40 tend à amener dans la position de saillie maximum déterminée montrée en Figure 8. Il pourrait être remplacé par un dispositif plus sommaire, par exemple à brosses flexibles : son rôle essentiel est de maintenir l'angle d'incidence dans des limites acceptables.

La partie active de la tête est constituée par un tronçon de tube 42 présentant une fenêtre, de forme allongée dans le sens axial, qui reçoit les traducteurs. Chaque traducteur est monté dans un support, tel que le support 28 de forme parallélépipédique.

La partie active est reliée à un manchon 46 muni d'un dispositif de centrage qui peut être identique à celui de l'embout 34. Les fils de liaison entre les traducteurs et une électronique située à distance sont placés dans le tube souple.

A titre d'exemple, on peut indiquer que des résultats satisfaisants ont été obtenus sur des tubes d'échangeur thermique en utilisant des traducteurs focalisés fonctionnant à une fréquence de 10 MHz, ayant un diamètre de 6 mm, avec un angle d'incidence de 20°. Pour des tubes ayant ce diamètre, il est même préférable de travailler à une fréquence plus élevée, par exemple 15 ou 20 MHz, qui semble être le meilleur compromis entre la recherche d'un diamètre minimum à focalisation donnée, un pas d'avance acceptable et le recul a des traducteurs forcément limité par le diamètre interne du tube.

Dans le cas des tubes d'échange déjà mentionnés, une distance de 3,5 mm entre axe des traducteurs 24 et diamètre permet d'atteindre l'incidence optimum de 20° et a donné de bons résultats.

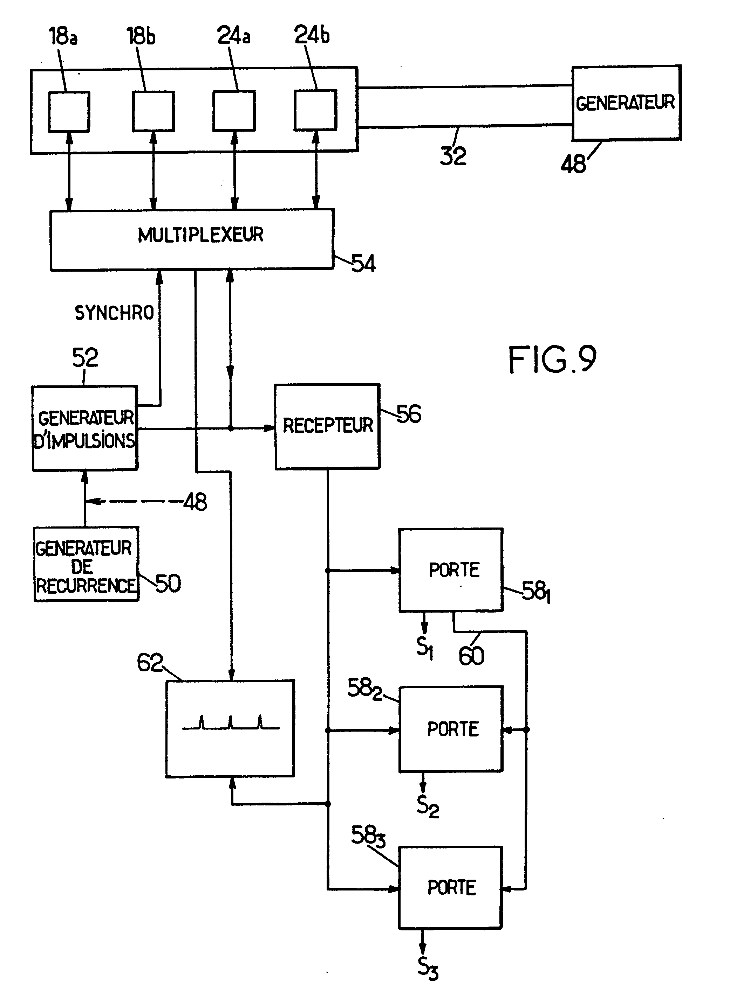

Le circuit associé à la tête dont le synoptique de principe est donné en Figure 9 est destiné à l'exploration en échographie C et à l'exploitation des échos par une unité de traitement informatisée, non représentée, dont la constitution peut être classique. La tête est fixée à l'extrémité du tube 32 auquel un mécanisme moteur permet de donner un mouvement hélicoïdal. Ce mécanisme est muni d'organes de mesure de la position angulaire et de la position axiale de la tête reliés à l'unité de traitement.

Le circuit comporte un générateur 50 de cadence de récurrence des opérations de détection, cadence choisie notamment en fonction de la vitesse d'avance de la tête. Ce générateur peut d'ailleurs être un codeur angulaire lié à la rotation de la tête de sonde de façon que les mesures deviennent indépendantes des défauts de mouvements de la tête. Le générateur 50, éventuellement 48, commande un générateur 52 d'impulsions électriques d'excitation des traducteurs et un signal de synchronisation à fréquence quatre fois plus faible. Un multiplexeur 54 relie successivement les quatre traducteurs 18a, 18b, 24a, 24b au générateur d'impulsions. L'impulsion d'excitation des traducteurs et les échos correspondants arrivent au récepteur 56, comportant des circuits d'amplification, de redressement et de filtrage, dont la sortie est reliée à trois portes analogiques $58_1$, $58_2$ et $58_3$. La porte $58_1$ est prévue pour transmettre sur une sortie de synchronisation 60 l'écho réfléchi d'asservissement. Pour cela elle est ouverte au bout d'un délai fixe après émission d'une impulsion par le générateur 52, grâce à un élément de retard non représenté. Les deux autres portes $58_2$ et $58_3$ sont ouvertes avec des retards différents par rapport au signal de synchronisation et d'asservissement. Ces retards et les durées d'ouverture sont tels qu'ils isolent respectivement les échos de défaut interne et externe. Les sorties $S_1$, $S_2$ et $S_3$ des trois portes sont reliées à l'unité de traitement.

Pour permettre une observation visuelle en échographie A, le signal impulsionnel délivré par le multiplexeur permettant de choisir un traducteur parmi les quatre est appliqué à l'entrée de déclenchement de balayage d'un oscilloscope 62 qui reçoit le signal de sortie du récepteur 56. On voit ainsi apparaître successivement l'écho d'asservissement réfléchi, l'écho de défaut éventuel et l'écho de fond.

Dans cette version, grâce au multiplexeur, on limite le nombre des éléments de la chaîne ultrasonore. Toutefois, pour des raisons de commodité, il est possible de constituer cette chaîne de quatre postes ultrasonores monovoie.

## Revendications

1. Dispositif ultrasonore de contrôle non destructif de tube mince, comprenant une tête (34, 42, 46) insérable dans le tube (10) et munie de moyens (36-40) de centrage dans ce dernier et des moyens permettant de donner à la tête (34, 42, 46) des mouvements de translation le long d'un axe et de rotation autour de cet axe, contenant des moyens traducteurs d'ultrasons couplés par immersion dans un liquide de couplage avec la paroi du tube (10), capables d'émettre un faisceau (16) d'ultrasons en ondes de volume et de détecter les échos, caractérisé en ce que lesdits moyens traducteurs comprennent :

— au moins un premier traducteur ultrasonore (18a, 18b) fournissant un faisceau (16) focalisé dirigé dans un plan méridien du tube (10) et faisant un angle avec la normale de la paroi, et

— au moins un second traducteur ultrasonore (24a, 24b) fournissant un faisceau (16) focalisé dirigé parallèlement à un diamètre du tube (10) et à distance de ce diamètre de façon que le faisceau soit oblique à la paroi du tube (10).

2. Dispositif suivant la revendication 1, caractérisé en ce que la tête (34, 42, 46) comprend deux premiers traducteurs (18a, 18b) disposés symétriquement par rapport à une section droite du tube (10).

3. Dispositif suivant la revendication 1 ou 2, caractérisé en ce que la tête (34, 42, 46) comprend deux seconds traducteurs (24a, 24b) placés symétriquement par rapport au diamètre du tube (10).

4. Dispositif selon la revendication 3, caractérisé en ce que les deux seconds traducteurs (24a, 24b) sont décalés le long de l'axe d'un demi-pas d'avance par tour de la tête (34, 42, 46).

5. Dispositif selon l'une quelconque des revendications 1 à 4, caractérisé en ce que les traducteurs (18a, 18b, 24a, 24b) sont munis d'un réflecteur (26) de renvoi de l'écho sur la face interne de la paroi du tube (10) vers le traducteur.

6. Dispositif selon la revendication 5, caractérisé en ce que la tête (34, 42, 46) est associée à un circuit comportant des portes ($58_2$,$58_3$) d'isolement des échos dus à des défauts internes et externes synchronisés par un signal obtenu à partir de l'écho réfléchi.

7. Dispositif selon l'une quelconque des revendications 1 à 6, caractérisé en ce que les traducteurs (18a, 18b, 24a, 24b) sont orientés de façon que l'angle du faisceau dans l'épaisseur du tube (10) par rapport à la normale à la paroi soit d'environ 45°.

## Patentansprüche

1. Ultraschallvorrichtung zur zerstörungsfreien Untersuchung von kleinen Rohren, umfassend einen Kopf (34, 42, 46), der einführbar in das Rohr (10) und mit Einrichtungen (36 bis 40) zum Zentrieren versehen ist, wobei die Einrichtungen erlauben an dem Kopf (34, 42, 46) Translationsbewegungen längs einer Achse und Rotationen um diese Achse abzugeben, enthaltend Ultraschallwandlereinrichtungen, gekoppelt mit der Wand des Rohres (10) durch Eintauchen in eine Kopplungsflüssigkeit, geeignet zum Aussenden von einem Ultraschallstrahlenbündel (16) in Volumenwellen und zum Wahrnehmen der Echos, **dadurch gekennzeichnet, daß die Wandlereinrichtungen umfassen :**

— wenigstens einen ersten Ultraschallwandler (18a, 18b), der ein fokussiertes, in einer meridialen Ebene des Rohres (10) geführtes Strahlenbündel (16) liefert und einen Winkel zur Normalen der Wand bildet, und

— wenigstens einen zweiten Ultraschallwandler (24a, 24b), der ein fokussiertes, parallel zu einem Durchmesser des Rohres (10) geführtes Strahlenbündel (16) und in einem Abstand von diesem Durchmesser ist, derart, daß das Strahlenbündel schräg zu der Wand des Rohres (10) ist.

2. Vorrichtung nach Anspruch 1, dadurch gekennzeichent, daß der Kopf (34, 42, 46) zwei erste Wandler (18a, 18b) umfaßt, die symmetrisch in Bezug zu einem Schnitt quer zum Rohr (10) angeordnet sind.

3. Vorrichtung nach dem Anspruch 1 oder 2, dadurch gekennzeichnet, daß der Kopf (34, 42, 46) zwei zweite Wandler (24a, 24b) umfaßt, die symmetrisch in Bezug auf einen Durchmesser des Rohres (10) angebracht sind.

4. Vorrichtung nach Anspruch 3, dadurch gekennzeichnet, daß die zwei zweiten Wandler (24a, 24b) längs der Achse um die halbe Länge der Vorwärtsbewegung pro Drehung des Kopfes (34, 42, 46) versetzt sind.

5. Vorrichtung nach einem der Ansprüche 1 bis 4, dadurch gekennzeichnet, daß die Wandler (18a, 18b, 24a, 24b) mit einem Reflektor (26) zum Zurückschicken des Echos auf die Innenseite der Wand des Rohres (10) gegen den Wandler versehen sind.

6. Vorrichtung nach Anspruch 5, dadurch gekennzeichnet, daß der Kopf (34, 42, 46) mit einem Schaltkreis verbunden ist, der die Gatter ($58_2$, $58_3$) zur Trennung der Echos, verursacht durch innere und äußere Fehlstellen, synchronisiert durch ein Signal, das beim Austreten des reflektierten Echos erhalten wird, umfaßt.

7. Vorrichtung nach einem der Ansprüche 1 bis 6, dadurch gekennzeichnet, daß die Wandler (18a, 18b, 24a, 24b) derartig ausgerichtet sind, daß der Winkel des Strahlenbündels in der Wand des Rohres (10) in Bezug zur Normalen etwa 45° schräg ist.

**Claims**

1. Ultrasonic device for non-destructive testing of a thin tube, comprising a head (34, 42, 46) insertable into the tube (10) and provided with means (36-40) for centering the head in the latter and means for imparting to the head (34, 42, 46) rectilinear movements along an axis and a rotational movement about the axis, containing ultrasonic transducer means coupled, by immersion in a coupling liquid, with the wall of the tube (10), able to transmit a ultrasonic beam (16) in the form of volume waves and to detect echoes, characterized in that said transducer means comprise :

— at least one first ultrasonic transducer (18a, 18b) delivering a focussed beam (16) directed in a meridian plane of the tube (10) and at an angle with a direction perpendicular to the wall, and

— at least one second ultrasonic transducer (24a, 24b) delivering a focussed beam (16) directed parallel to a diameter of the tube (10) and at a distance from the diameter whereby the beam is oblique with respect to the wall of the tube (10).

2. Device according to claim 1, characterized in that the head (34, 42, 46) has two first transducers (18a, 18b) located symmetrically with respect to a plane perpendicular to the axis of the tube (10).

3. Device according to claim 1 or 2, characterized in that the head (34, 42, 46) has two second transducers (24a, 24b) located symmetrically with respect to the diameter of the tube (10).

4. Device according to claim 3, characterized in that the two second transducers (24a, 24b) are offset along the axis by one half the distance over which the head (34, 42, 46) moves per turn.

5. Device according to any one of claims 1-4, characterized in that the transducers (18a, 18b, 24a, 24b) are provided with a reflector (26) for reflecting the echo on the inner surface of the wall of the tube (10) towards the transducer.

6. Device according to claim 5, characterized in that the head (34, 42, 46) is associated with a circuit having gates ($58_2$, $58_3$) for separating echoes due to internal faults and external faults, synchronized by a signal derived from the reflected echo.

7. Device according to any one of claims 1-6, characterized in that the transducers (18a, 18b, 24a, 24b) are so angularly located that the angle of the beam within the thickness of the tube (10) with respect to a line orthogonal to the wall is about 45°.

FIG.1.

FIG.2.

FIG.3.

FIG.5.

FIG.7.

FIG.6.

FIG.4.

EP 0 318 387 B1

# FIG.8.

EP 0 318 387 B1

FIG.9